# EUROPEAN PATENT SPECIFICATION

(11) **EP 4 076 904 B1**
(45) Date of publication and mention of the grant of the patent: **20.03.2024**
(21) Application number: 20817332.8
(22) Date of filing: 02.12.2020
(51) Int. Cl.: B29C 64/118, B29C 64/245, B29C 64/40, B28B 1/00, C04B 35/634, D01F 1/10, D01F 8/04, B29C 64/106, B33Y 40/20, B33Y 70/10

(54) **A PROCESS FOR THE PRODUCTION OF A THREE-DIMENSIONAL GREEN BODY**
VERFAHREN ZUR HERSTELLUNG EINES DREIDIMENSIONALEN GRÜNKÖRPERS
PROCÉDÉ DE PRODUCTION D'UN CORPS CRU TRIDIMENSIONNEL

(30) Priority: 19.12.2019 EP 19218245
(43) Date of publication of application: 26.10.2022
(73) Proprietor: BASF SE, 67056 Ludwigshafen am Rhein (DE)
(72) Inventor: SEILER, Rudolf, 67056 Ludwigshafen (DE); SCHWENDY, Sascha Tim, 67056 Ludwigshafen (DE); ARBTER, Rene, 67056 Ludwigshafen (DE); STAUDT, Thorsten Martin, 67056 Ludwigshafen (DE)
(74) Representative: BASF IP Association
(86) International application number: PCT/EP2020/084262
(87) International publication number: WO 2021/121999

(56) References cited:
- WO-A1-2017/009190
- US-A1- 2018 304 365
- US-A1- 2018 305 266
- US-A1- 2019 255 772

## Description

The present invention relates to a process for the production of a three-dimensional green body (GB) by a three-dimensional (3D) printing process, in which at least one feedstock, a built chamber and a three-dimensional extrusion printer (3D printer) containing at least one nozzle are employed. In this process, the at least one feedstock is fed into the 3D printer containing the at least one nozzle, wherein the at least one feedstock comprises at least one binder (B) and at least one inorganic powder (IP), and wherein the at least one binder (B) comprises at least one polyoxymethylene (POM). The at least one feedstock is then heated inside the 3D printer and extruded through the at least one nozzle in order to obtain at least one extruded strand. From the at least one extruded strand, the three-dimensional green body (GB) is formed layer by layer on a base plate (BP) located in the build chamber, wherein the base plate (BP) comprises the at least one binder (B) and optionally the at least one inorganic powder (IP). The three-dimensional green body (GB) and the base plate (BP) are removed from the build chamber, wherein the three-dimensional green body (GB) is attached to the base plate (BP). The present invention further relates to a three-dimensional green body (GB) prepared by this process and to a three-dimensional sintered body prepared from the three-dimensional green body (GB).

A task often encountered in recent times is the production of prototypes and models of metallic or ceramic bodies, in particular of prototypes and models exhibiting complex geometries. Especially for the production of prototypes, a rapid production process is necessary. For this so called "rapid prototyping", different processes are known. One of the most economical is the fused filament fabrication process (FFF), also known as "fused deposition modelling" (FDM).

The fused filament fabrication process (FFF) is an additive manufacturing technology. A three-dimensional object is produced by extruding a thermoplastic material through a nozzle to form layers as the thermoplastic material hardens after extrusion. The nozzle is heated to heat the thermoplastic material past its melting and/or glass transition temperature and is then deposited by the extrusion head on a base to form the three-dimensional object in a layer-wise fashion. The thermoplastic material is typically selected and its temperature is controlled so that it solidifies substantially immediately upon extrusion or dispensing onto the base with the build-up of multiple layers to form the desired three-dimensional object.

In order to form each layer, drive motors are provided to move the base and/or the extrusion nozzle (dispending head) relative to each other in a predetermined pattern along the x-, y- and z-axis. The FFF-process was first described in US 5,121,329. Typical materials for the base are glass or aluminium with adhesion layer.

Typical materials for the production of three-dimensional objects are thermoplastic materials. The production of three-dimensional metallic or ceramic objects by fused filament fabrication is only possible if the metal or ceramic material has a low melting point so that it can be heated and melted by the nozzle. If the metal or ceramic material has a high melting point, it is necessary to provide the metal or ceramic material in a binder composition to the extrusion nozzle. The binder composition usually comprises a thermoplastic material. When depositing the mixture of a metal or ceramic material in a binder on a base, the formed three-dimensional object is a so called "green body", which comprises the metal or ceramic material in a binder. To receive the desired metallic or ceramic object, the binder has to be removed and finally the object has to be sintered. The three-dimensional object which is formed after removing the binder is a so called "brown body"; the three-dimensional object which is formed after sintering is a so called "sintered body".

WO 2016/012486 describes a fused filament fabrication process in which a mixture comprising an inorganic powder and a binder is used to produce a three-dimensional green body. The fused filament fabrication process is followed by a debinding step, in which at least part of the binder is removed from the three-dimensional green body to form a three-dimensional brown body. The debinding step is carried out by treating the three-dimensional green body in an atmosphere comprising a gaseous acid and optionally a carrier gas at temperatures up to 180°C in order to avoid the condensation of the acid. Suitable acids are inorganic acids such as hydrogen halides and nitric acid, and organic acids such as formic acid and acetic acid. After the debinding step, the formed three-dimensional brown body is sintered to form a three-dimensional sintered body.

WO 2017/009190 describes a filament for the use in a fused filament fabrication process to prepare a three-dimensional green body. The filament comprises a core material which is coated with a layer of shell material. The core material comprises an inorganic powder and a binder. The preparation of the three-dimensional brown body as well as the three-dimensional sintered body can be prepared analogously as described in WO 2016/012486. However, the core-shell-filaments described in WO 2017/009190 are more stable and can be easily rolled on a spool, which renders them easier to store and process than those disclosed in WO 2016/012486.

As described above, the FFF/FDM method is one of the most commonly used 3D printing technologies. However, several variants of the FDM/FFF method exist, sometimes such variants are summarized under the term "FDM/FFF process", and sometimes such variants are even considered as being individual/different 3D printing techniques. One of such variations of the commonly used FDM/FFM method can be found by replacing the filament used as the "classical starting material" within a FDM/FFF printing process by a granulate material. The granulate material may be completely or overwhelmingly identical in terms of its chemical composition compared to the corresponding filament used in a conventional FFF/FDM printing process, but the granulate differs from the corresponding filaments in terms of its shape.

In accordance with a conventional FDM/FFF printing technique in terms of the chemical composition of the filament, various granulates can be employed as starting materials within a granulate-based 3D extrusion printing technique/process. The granulates to be employed are usually based on a polymer, in particular a thermoplastic material which can be heated to a temperature past its melting and/or glass transition temperature within the 3D extrusion printing process. The granulates to be employed may also contain some inorganic powder such as metal, metal alloy or ceramic material, besides the above mentioned polymer, in particular the thermoplastic material. If so, a 3D green body is obtained by a corresponding 3D printing process. In analogy to conventional FFF/FDM printing techniques, the organic/polymeric part of such a 3D green body may be removed in order to obtain 3D metallic or ceramic objects such as 3D brown bodies and 3D sintered bodies.

However, in the three-dimensional (3D) printing processes described in the prior art, there are often problems resulting from the adhesion between the base and the first layer of the extruded mixture which is deposited on the base: One the one hand, in case the adhesion between the first deposited layer and the base is too low, for example in case the base is made of glass, the undesired phenomenon "warping" occurs; on the other hand, in case the adhesion between the first deposited layer and the base is too strong, the resulting three-dimensional object is damaged while separating it from the base.

In the context of the present invention, the term "warping" means an effect which typically occurs while the deposited layers cool down on the base. Whereas the base retains its shape, the extruded mixture begins to shrink which causes the deposited layers to contract. In case there is a low adhesion between the first deposited layer and the base, the corners of the deposited layer lift and detach partially from the base. This often leads to a shape change of the resulting three-dimensional objects (round edges) and they may detach completely. Thus, the deposited layers become unusable and the printing process has to be interrupted.

In order to avoid the "warping" phenomenon and to improve the adhesion between the deposited layers and the base, often a polyethylene bonding layer is applied on the base before starting the deposition of the layers. However, with this polyethylene bonding layer, in many cases, the adhesion between the deposited layers and the base becomes too strong, which results in the damage of the three-dimensional object by separating it from the base.

A further problem frequently arising is the so-called "distortion" which typically occurs while sintering a three-dimensional brown body. Usually parts are placed directly on a ceramic plate for sintering. Whereas the base remains its shape or does it change only little, the three-dimensional brown body shrinks while sintering, which causes a friction between the base and the three-dimensional brown body. As a result, there are stresses throughout the three-dimensional brown body which lead to deformation and fracturing.

Therefore, the object underlying the present invention is to provide an improved process for the production of a three-dimensional body which does not have the above-mentioned disadvantages of the prior art or has them only to a significantly reduced extend.

This object is achieved by the process for the production of a three-dimensional green body (GB) by a three-dimensional (3D) printing process employing at least one feedstock, a built chamber and a three-dimensional extrusion printer (3D printer) containing at least one nozzle, the process comprising the following steps a) to e):
a) feeding the at least one feedstock into the 3D printer containing the at least one nozzle, wherein the at least one feedstock comprises at least one binder (B) and at least one inorganic powder (IP), and wherein the at least one binder (B) comprises at least one polyoxymethylene (POM),
b) heating the at least one feedstock inside the 3D printer,
c) extruding the at least one heated feedstock obtained in step b) through the at least one nozzle in order to obtain at least one extruded strand,
d) forming the three-dimensional green body (GB) layer by layer from the at least one extruded strand obtained in step c) on a base plate (BP) located in the build chamber, wherein the base plate (BP) comprises the at least one binder (B) and optionally the at least one inorganic powder (IP), and
e) removing the three-dimensional green body (GB) and the base plate (BP) from the build chamber, wherein the three-dimensional green body (GB) is attached to the base plate (BP).

It has surprisingly been found that by the inventive process the adhesion of the first layer, formed from the at least one extruded strand, to the base plate (BP) is significantly increased, also at low temperatures, leading to a reduced warping of the formed three-dimensional green body (GB). It has also been found that, in case the base plate (BP) comprises at least one inorganic powder (IP), the base plate (BP) has an increased thermal conductivity and capacity which leads to a more uniform temperature distribution within the base plate (BP) and, therefore, to a further increase in adhesion.

The increased adhesion makes it possible to form the inventive three-dimensional green body (GB) more rapidly compared to the forming processes of three-dimensional green bodies described in the prior art, which saves time and money. In addition, no polyethylene bonding layer is necessary.

Furthermore, it has also surprisingly been found that by the inventive process also the total speed for producing the three-dimensional sintered body is significantly increased as, after printing, the three-dimensional green body (GB) can remain attached to the base plate (BP) during debinding and sintering. For example, it can, together with the base plate (BP), be removed from the build chamber and directly placed in a continuous furnace system for debinding and sintering. Thus, the inventive process can be automatized which also makes it very time-saving and cost-efficient.

After debinding and sintering, the base plate (BP) and the resulting three-dimensional sintered body can be separated mechanically, wherein the resulting three-dimensional sintered body shows less distortion compared to sintered bodies produced by processes described in the state of the art.

The invention is specified in more detail as follows.

According to the invention, a three-dimensional green body (GB) is produced by a three-dimensional (3D) printing process employing at least one feedstock, a built chamber and a three-dimensional extrusion printer (3D printer) containing at least one nozzle.

As already described above, the three-dimensional (3D) printing technique as such is known to a person skilled in the art. By consequence, also feedstocks, built chambers and three-dimensional (3D) extrusion printers as such, suitable to be employed in such a 3D printing process, are known to a person skilled in the art. The same holds true for a three-dimensional green body (GB) as such, obtained by a 3D printing technique, which is also known to a person skilled in the art. By consequence, conventional 3D extrusion printers can be employed within the inventive process and/or a person skilled in the art knows how to modify such conventional 3D extrusion printers due to his technical skills in order to be able to carry out the inventive process.

In the context of the present invention, the term "at least one feedstock" is understood to mean exactly one feedstock as well as two or more feedstocks. In a preferred embodiment, one feedstock is employed in the three-dimensional (3D) printing process. Further, in the context of the present invention, the term "at least one nozzle" is understood to mean exactly one nozzle as well as two or more nozzles. In a preferred embodiment, the three-dimensional extrusion printer contains one nozzle.

The material of the nozzle can usually be any material which remains solid during the operation of the nozzle and includes metals and/or ceramics. The inside of the nozzle can further be coated with a suitable coating material, for example TiNs, Ni-PTFE (Nickelpolytetrafluoroethylene), Ni-PFA (Nickel-perfluoroalkoxy) or the like.

The nozzle can generally be of any form or size, depending on the process in which it is used. Preferably, the nozzle has a cylindrical shape.

The nozzle can have an extrusion diameter in the range of several hundred micrometers to several millimeters, for example, in the range of 0.1 mm to 5 mm, preferably in the range of from 0.2 mm to 4 mm, more preferably in the range of from 0.3 mm to 2 mm, especially preferably in the range of from 0.4 mm to 1 mm. Preferably, the extrusion diameter of the nozzle is less than 3 mm, more preferably less than 2 mm and especially preferably less than 1 mm.

The nozzle feed diameter is preferably in the range of 1 mm to 20 mm, more preferably in the range of from 1.5 mm to 15 mm, even more preferably in the range of from 2 mm to 12 mm and especially preferably in the range of from 2.5 mm to 10 mm. Within the context of the present invention, the term "nozzle feed diameter" is understood to mean the diameter between the inner walls of the cross-section of the at least one nozzle.

The nozzle length can also vary greatly depending on the intended application and can be in the range of 1.5 cm to 20 cm, preferably in the range of 2 cm to 10 cm and more preferably in the range of 2.5 cm to 5 cm.

The inventive process comprises steps a) to e).

### Step a)

According to step a), the at least one feedstock is fed into the 3D printer containing the at least one nozzle.

As already mentioned above, within the context of the present invention, the term "at least one feedstock" is understood to mean exactly one feedstock and mixtures of two or more feedstocks. In a preferred embodiment, only one feedstock is fed into the 3D printer containing the at least one nozzle.

The at least one feedstock comprises at least one binder (B) and at least one inorganic powder (IP), wherein the at least one binder (B) comprises at least one polyoxymethylene (POM).

In the inventive process, any known inorganic powder (IP) can be used. Preferably, a sinterable inorganic powder (IP) is used as component (IP). More preferably, the at least one inorganic powder (IP) is a powder of at least one inorganic material selected from the group consisting of a metal, a metal alloy and a ceramic material precursor, most preferably the at least one inorganic powder (IP) is a metal or a metal alloy, particularly preferably, the at least inorganic powder (IP) is a metal.

"At least one inorganic powder (IP)" means precisely one inorganic powder (IP) as well as a mixture of two or more inorganic powders (IP). The same holds true for the term "at least one inorganic material". "At least one inorganic material" means precisely one inorganic material as well as mixtures of two or more inorganic materials.

"A metal" means precisely one metal as well as mixtures of two or more metals. A metal as inorganic powder (IP) can be selected from any metal of the periodic table of elements which is stable under the conditions of a three-dimensional (3D) printing process and which can form three-dimensional objects. Preferably, the metal is selected from the group consisting of aluminum, yttrium, titanium, zirconium, vanadium, niobium, chromium, molybdenum, tungsten, manganese, iron, carbonyl iron powder (CIP), cobalt, nickel, copper, silver, zinc and cadmium, more preferably, the metal is selected from the group consisting of titanium, niobium, chromium, molybdenum, tungsten, manganese, iron, carbonyl iron powder (CIP), nickel and copper. With particular preference, the metal is selected from the group consisting of titanium, iron and carbonyl iron powder (CIP).

Carbonyl iron powder (CIP) is highly pure iron powder prepared by chemical decomposition of purified iron pentacarbonyl.

"A metal alloy" means precisely one metal alloy as well as mixtures of two or more metal alloys. Within the context of the inventive process, the term "metal alloy" is understood to mean a solid solution or a partially solid solution, which exhibits metallic properties and comprises a metal and another element "A metal" means, as stated above, precisely one metal and also mixtures of two or more metals. The same applies to "another element". "Another element" means precisely one other element and also mixtures of two or more other elements.

Solid solution metal alloys exhibit a single solid phase microstructure while partially solid solution metal alloys exhibit two or more solid phases. These two or more solid phases can be homogeneously distributed in the metal alloy, but they can also be heterogeneously distributed in the metal alloy.

The metal alloys can be prepared according to any process known to the person skilled in the art. For example, the metal can be melted and the other element can be added to the molten metal. However, it is also possible, to add the metal and the other element directly to a mixture for preparing the at least one feedstock or, in case the at least one feedstock is a filament comprising a core material (CM) and a shell material (SM), to add the metal and the other element directly to the core material (CM) of the filament, in each case without the preparation of a metal alloy before. The metal alloy will then be formed during the process of the preparation of the three-dimensional object.

Concerning the metal, the above-stated embodiments and preferences for the metal apply. The other element can be selected from the metals described above. However, the other element differs from the metal comprised in the metal alloy.

The other element can be selected from any element of the periodic table, which forms a metal alloy that is stable under the conditions of a three-dimensional (3D) printing process or which is stable or forms stable alloys with the metal under the conditions of a three-dimensional (3D) printing process. In a preferred embodiment of the present invention, the other element is selected from the group consisting of the aforementioned metals, boron, carbon, silicon, phosphorous, sulfur, selenium and tellurium. Particularly preferably, the at least one other element is selected from the group consisting of the aforementioned metals, boron, carbon, silicon, phosphorous and sulfur.

Preferably, the metal alloy in the inventive process comprises steel.

"A ceramic material precursor" means precisely one ceramic material precursor as well as mixtures of two or more ceramic material precursors. In the context of the present invention, the term "ceramic material precursor" means a non-metallic compound of a metal or a first metalloid, and a non-metal or a second metalloid.

"A metal" means precisely one metal and also mixtures of two or more metals. The same relies to "a non-metal" and "a first metalloid", as well as "a second metalloid". "A non-metal" means precisely one non-metal and also mixtures of two or more non-metals. "A first metalloid" means precisely one first metalloid and also mixtures of two or more first metalloids. "A second metalloid" means precisely one second metalloid and also mixtures of two or more second metalloids.

Non-metals are known per se to the person skilled in the art. The non-metal can be selected from any non-metal of the periodic table. Preferably, the at least one non-metal is selected from the group consisting of carbon, nitrogen, oxygen, phosphorus and sulfur.

Metalloids are well-known per se to the skilled person. The first metalloid and the second metalloid can be selected from any metalloid of the periodic table. Preferably, the first metalloid and/or the second metalloid are selected from the group consisting of boron and silicon. It should be clear that the first metalloid and the second metalloid differ from each other. For example, if the first metalloid is boron, then the second metalloid is selected from any other metalloid of the periodic table of the elements besides boron.

The ceramic material obtained after sintering of the ceramic material precursor may have the same or a different chemical composition as the ceramic material precursor. For example, sintering of BaO may result in BaO and sintering of CaCOs may result in CaO.

If the at least one inorganic powder (IP) comprises a ceramic material precursor, the ceramic material precursor is preferably selected from the group consisting of oxides, carbides, borides, nitrides and silicides. More preferably, the ceramic material precursor is selected from the group consisting of MgO, CaO, SiO₂, Na₂O, K₂O, Al₂O₃, ZrO₂, Y₂O₃, SiC, Si₃N₄, TiB, AIN, CaCO₃, xAl₂O₃·ySiO₂·zH₂O (aluminum silicate), TiO₂, NaAlSi₃O₈, KAlSi₃O₈, CaAl₂Si₂O₈ (Feldspar), iron oxide (FeO, Fe₂O₃, Fe₃O₄), BaO and mixtures thereof. Particularly preferred, the ceramic material precursor is selected from the group consisting of Al₂O₃, ZrO₂ and Y₂O₃.

If the inorganic powder (IP) comprises a ceramic material precursor, the respective ceramic material obtained after sintering of the ceramic material precursor may have the same or a different chemical composition as the ceramic material precursor.

For the preparation of the inorganic powder (IP), the inorganic material has to be pulverized. To pulverize the inorganic material, any method known to the person skilled in the art can be used. For example, the inorganic material can be ground. The grinding for example can take place in a classifier mill, in a hammer mill or in a ball bill.

The particles size of the inorganic powders (IP) used are preferably from 0.1 to 80 µm, particularly preferably from 0.5 to 50 µm, more preferably from 1 to 30 µm, measured by laser diffraction.

The at least one feedstock further comprises at least one binder (B).

"At least one binder" means precisely one binder (B) as well as a mixture of two or more binders (B).

According to the present invention, the at least one binder (B) comprises at least one polyoxymethylene (POM).

The terms "component (b1)" and "polyoxymethylene (POM)" for the purpose of the present invention are synonymous and are used interchangeably throughout the present invention.

Preferably, the at least one binder (B) comprises 50 to 98 % by weight, more preferably 60 to 90 % by weight, most preferably 70 to 85 % by weight of the at least one polyoxymethylene (POM), based on the total weight of the binder (B).

"At least one polyoxymethylene (POM)" within the present invention means precisely one polyoxymethylene (POM) and also mixtures of two or more polyoxymethylenes (POM).

For the purpose of the present invention, the term "polyoxymethylene (POM)" encompasses both polyoxymethylene (POM) itself, i. e. polyoxymethylene (POM) homopolymers, and also polyoxymethylene (POM) copolymers and polyoxymethylene (POM) terpolymers.

Polyoxymethylene (POM) homopolymers usually are prepared by polymerization of a monomer selected from a formaldehyde source (b1a).

The term "formaldehyde source (b1a)" relates to substances which can liberate formaldehyde under the reaction conditions of the preparation of polyoxymethylene (POM).

The formaldehyde sources (b1a) are advantageously selected from the group of cyclic or linear formals, in particular from the group consisting of formaldehyde and 1,3,5-trioxane. 1,3,5-trioxane is particularly preferred.

Polyoxymethylene (POM) copolymers are known per se and are commercially available. They are usually prepared by polymerization of trioxane as main monomer. In addition, comonomers are concomitantly used. The main monomers are preferably selected from among trioxane and other cyclic or linear formals or other formaldehyde sources (b1a).

The expression "main monomers" is intended to indicate that the proportion of these monomers in the total amount of monomers, i. e. the sum of main monomers and comonomers, is greater than the proportion of the comonomers in the total amount of monomers.

Quite generally, polyoxymethylene (POM) preferably has at least 50 mol-% of repeating units -CH₂O- in the main polymer chain. Suitable polyoxymethylene (POM) copolymers are in particular those which comprise the repeating units -CH₂O- and from 0.01 to 20 mol-%, in particular from 0.1 to 10 mol-% and very particularly preferably from 0.5 to 6 mol-% of repeating units of the formula (I), 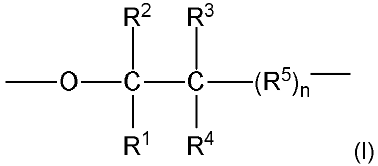 wherein
R¹ to R⁴ are each independently of one another selected from the group consisting of H, C₁-C₄-alkyl and halogen-substituted C₁-C₄-alkyl;
R⁵ is selected from the group consisting of a chemical bond, a (-CR^{5a}R^{5b}-) group and a (-CR^{5a}R^{5b}O-) group,
wherein
R^{5a} and R^{5b} are each independently of one another selected from the group consisting of H and unsubstituted or at least monosubstituted C₁-C₄-alkyl,
wherein the substituents are selected from the group consisting of F, Cl, Br, OH and C₁-C₄-alkyl;
n is 0, 1, 2 or 3.

If n is 0, then R⁵ is a chemical bond between the adjacent carbon atom and the oxygen atom. If R⁵ is a (-CR^{5a}R^{5b}O-) group, then the oxygen atom (O) of the (-CR^{5a}R^{5b}O-) group is bound to another carbon atom (C) of formula (I) and not to the oxygen atom (O) of formula (I). In other words, formula (I) does not comprise peroxide compounds. The same holds true for formula (II).

Within the context of the present invention, definitions such as C₁-C₄-alkyl, as for example defined above for the radicals R¹ to R⁴ in formula (I), mean that this substituent (radical) is an alkyl radical with a carbon atom number from 1 to 4. The alkyl radical may be linear or branched and also optionally cyclic. Alkyl radicals which have both a cyclic component and also a linear component likewise fall under this definition. Examples of alkyl radicals are methyl, ethyl, n-propyl, iso-propyl, butyl, iso-butyl, sec-butyl and tert-butyl.

In the context of the present invention, definitions, such as halogen-substituted C₁-C₄-alkyls, as for example defined above for the radicals R¹ to R⁴ in formula (I), mean that the C₁-C₄-alkyl is substituted by at least one halogen. Halogens are F (fluorine), Cl (chlorine), Br (bromine) and I (iodine).

The repeating units of formula (I) can advantageously be introduced into the polyoxymethylene (POM) copolymers by ring-opening of cyclic ethers as first comonomers (b1b). Preference is given to first comonomers (b1b) of the general formula (II), 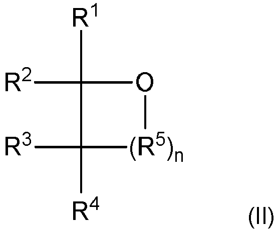 wherein
R¹ to R⁵ and n have the meanings as defined above for the general formula (I).

As first comonomers (b1b) mention may be made for example of ethylene oxide, 1,2-propylene oxide, 1,2-butylene oxide, 1,3-butylene oxide, 1,3-dioxane, 1,3-dioxolane and 1,3-dioxepane (= butanediol formal, BUFO) as cyclic ethers and also linear oligoformals or polyformals such as polydioxolane or polydioxepane. 1,3-dioxolane and 1,3-dioxepane are particularly preferred first comonomers (b1b), very particular preferred is 1,3-dioxepane as first comonomer b1b).

Polyoxymethylene (POM) polymers which can be obtained by reaction of a formaldehyde source together with the first comonomer (b1b) and a second comonomer (b1c) are likewise suitable. The addition of the second comonomer (b1c) makes it possible to prepare, in particular, polyoxymethylene (POM) terpolymers.

The second comonomer (b1c) is preferably selected from the group consisting of a compound of formula (III) and a compound of formula (IV), 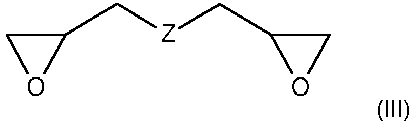 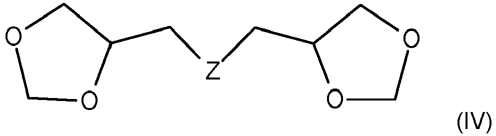 wherein
Z is selected from the group consisting of a chemical bond, an (-O-) group and an (-O-R⁶-O-) group,
wherein
R⁶ is selected from the group consisting of unsubstituted C₁-C₈-alkylene and C₃-C₈-cycloalkylene.

Within the context of the present invention, definitions such as C₁-C₈-alkylene means C₁-C₈-alkanediyl. The C₁-C₈-alkylene is a hydrocarbon having two free valences and a carbon atom number of from 1 to 8. The C₁-C₈-alkylene can be branched or unbranched.

Within the context of the present invention, definitions such as C₃-C₈-cycloalkylene means C₃-C₈-cycloalkanediyl. A C₃-C₈-cycloalkylene is a cyclic hydrocarbon having two free valences and a carbon atom number of from 3 to 8. Hydrocarbons having two free valences, a cyclic and also a linear component, and a carbon atom number of from 3 to 8 likewise fall under this definition.

Preferred examples of the second comonomer (b1c) are ethylene diglycidyl, diglycidyl ether and diethers prepared from glycidyl compounds and formaldehyde, dioxane or trioxane in a molar ratio of 2 : 1 and likewise diethers prepared from 2 mol of a glycidyl compound and 1 mol of an aliphatic diol having from 2 to 8 carbon atoms, for example the diglycidyl ether of ethylene glycol, 1,4-butanediol, 1,3-butanediol, 1,3-cyclobutanediol, 1,2-propanediol and 1,4-cyclohexanediol.

In a preferred embodiment, component (b1) is a polyoxymethylene (POM) copolymer which is prepared by polymerization of from at least 50 mol-% of a formaldehyde source (b1a), from 0.01 to 20 mol-% of at least one first comonomer (b1b) and from 0 to 20 mol-% of at least one second comonomer (b1c).

In a particularly preferred embodiment component (b1) is a polyoxymethylene (POM) copolymer which is prepared by polymerization of from 80 to 99.98 mol-%, preferably from 88 to 99 mol-% of a formaldehyde source (b1a), from 0.1 to 10 mol-%, preferably from 0.5 to 6 mol-% of at least one first comonomer (b1b) and from 0.1 to 10 mol-%, preferably from 0.5 to 6 mol-% of at least one second comonomer (b1c).

In a further preferred embodiment component (b1) is a polyoxymethylene (POM) copolymer which is prepared by polymerization of from at least 50 mol-% of a formaldehyde source (b1a), from 0.01 to 20 mol-% of at least one first comonomer (b1b) of the general formula (II) and from 0 to 20 mol-% of at least one second comonomer (b1c) selected from the group consisting of a compound of formula (III) and a compound of formula (IV).

In a preferred embodiment, in the at least one binder (B) component (b1) is a polyoxymethylene (POM) copolymer which is prepared by polymerization of
- from at least 50 mol-% of a formaldehyde source (b1a),
- from 0.01 to 20 mol-% of at least one first comonomer (b1b) of the general formula (II) 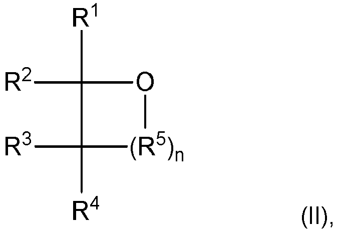
wherein
R¹ to R⁴ are each independently of one another selected from the group consisting of H, C₁-C₄-alkyl and halogen-substituted C₁-C₄-alkyl;
R⁵ is selected from the group consisting of a chemical bond, a (-CR^{5a}R^{5b}-) group and a (-CR^{5a}R^{5b}O-) group,
wherein
R^{5a} and R^{5b} are each independently of one another selected from the group consisting of H and unsubstituted or at least monosubstituted C₁-C₄-alkyl,
wherein the substituents are selected from the group consisting of F, Cl, Br, OH and C₁-C₄-alkyl;
n is 0, 1, 2 or 3;
and
- from 0 to 20 mol-% of at least one second comonomer (b1c) selected from the group consisting of a compound of formula (III) and a compound of formula (IV) 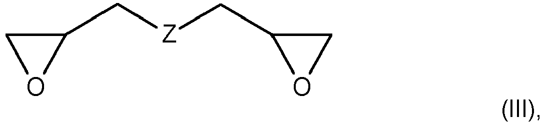 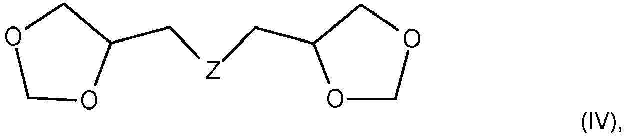
wherein
Z is selected from the group consisting of a chemical bond, an (-O-) group and an (-O-R⁶-O-) group,
wherein
R⁶ is selected from the group consisting of unsubstituted C₁-C₈-alkylene and C₃-C₈-cycloalkylene.

In a preferred embodiment, at least some of the OH-end groups of the polyoxymethylene (POM) are capped. Methods for capping OH-end groups are known to the skilled person. For example, the OH-end groups can be capped by etherification or esterification.

Preferred polyoxymethylene (POM) copolymers have melting points of at least 150°C and weight average molecular weights Mw in the range from 5 000 g/mol to 300 000 g/mol, preferably from 6000 g/mol to 150 000 g/mol, particularly preferably in the range from 7 000 g/mol to 100 000 g/mol.

Particular preference is given to polyoxymethylene (POM) copolymers having a polydispersity (M_{w}/Mₙ) of from 2 to 15, preferably from 2.5 to 12, particularly preferably from 3 to 9.

The measurement of the weight-average molecular weight (M_{w}) and the number-average molecular weight (Mₙ) is generally carried out by gel permeation chromatography (GPC). GPC is also known as sized exclusion chromatography (SEC).

Methods for the preparation of polyoxymethylene (POM) are known to those skilled in the art.

Further, the at least one binder (B) may comprise a component (b2).

Preferably, the at least one binder (B) comprises from 2 to 50 % by weight, more preferably from 5 to 20 % by weight, most preferably from 5 to 15 % by weight, of component (b2).

Preferably component (b2) is at least one polyolefin (PO). "At least one polyolefin (PO)" within the present invention means precisely one polyolefin (PO) and also mixtures of two or more polyolefins (PO).

Polyolefins (PO) are known per se and are commercially available. They are usually prepared by polymerization of C₂-C₈-alkene monomers, preferably by polymerization of C₂-C₄-alkene monomers.

Within the context of the present invention, C₂-C₈-alkene means unsubstituted or at least monosubstituted hydrocarbons having 2 to 8 carbon atoms and at least one carbon-carbon double bond (C-C-double bond). "At least one carbon-carbon double bond" means precisely one carbon-carbon double bond and also two or more carbon-carbon double bonds.

In other words, C₂-C₈-alkene means that the hydrocarbons having 2 to 8 carbon atoms are unsaturated. The hydrocarbons may be branched or unbranched. Examples for C₂-C₈-alkenes with one C-C-double bond are ethene, propene, 1-butene, 2-butene, 2-methyl-propene (= isobutylene), 1-pentene, 2-pentene, 2-methyl-1-butene, 3-methyl-1-butene, 1-hexene, 2-hexene, 3-hexene and 4-methyl-1-pentene. Examples for C₂-C₈-alkenes having two or more C-C-double bonds are allene, 1,3-butadiene, 1,4-pentadiene, 1,3-pentadiene, 2-methyl-1,3-butadiene (= isoprene).

If the C₂-C₈-alkenes have one C-C-double bond, the polyolefins (PO) prepared from those monomers are linear. If more than one double bond is present in the C₂₋C₈-alkenes, the polyolefins (PO) prepared from those monomers can be crosslinked. Linear polyolefins (PO) are preferred.

It is also possible to use polyolefin (PO) copolymers, which are prepared by using different C₂-C₈-alkene monomers during the preparation of the polyolefins (PO).

Preferably, the polyolefins (PO) are selected from the group consisting of polymethylpentene, poly-1-butene, polyisobutylene, polyethylene and polypropylene. Particular preference is given to polyethylene and polypropylene and also their copolymers as are known to those skilled in the art and are commercially available.

The polyolefins (PO) can be prepared by any polymerization process known to the skilled person, preferably by free radical polymerization, for example by emulsion, bead, solution or bulk polymerization. Possible initiators are, depending on the monomers and the type of polymerization, free radical initiators such as peroxy compounds and azo compounds with the amounts of initiator generally being in the range from 0.001 to 0.5% by weight, based on the monomers.

The at least one binder (B) may also comprise a further polymer (FP) as component (b3).

The terms "component (b3)" and "further polymer (FP)" for the purpose of the present invention are synonymous and are used interchangeably throughout the present invention.

Preferably, the binder (B) comprises 0 to 40 % by weight, more preferably 2 to 30 % by weight, most preferably 3 to 26 % by weight, based on the total weight of the binder (B), as component (b3).

Component (b3) preferably is at least one further polymer (FP). "At least one further polymer (FP)" within the present invention means precisely one further polymer (FP) and also mixtures of two or more further polymers (FP).

As already stated above, the at least one further polymer (FP) differs from component (b1), the polyoxymethylene (POM), and component (b2), the polyolefin (PO).

The at least one further polymer (FP) preferably is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl(meth)acrylate) and copolymers thereof.

Preferably, component (b3), the at least one further polymer (FP), is selected from the group consisting of a poly(C₂-C₆-alkylene oxide), an aliphatic polyurethane, an aliphatic uncrosslinked epoxide, an aliphatic polyamide, a vinyl aromatic polymer, a poly(vinyl ester) of an aliphatic C₁-C₈ carboxylic acid, a poly(vinyl ether) of a C₁-C₈ alkyl vinyl ether, a poly(alkyl(meth)acrylate) of a C₁₋₈-alkyl and copolymers thereof.

Preferred at least one further polymers (FP) are described in more detail below.

Polyethers comprise repeating units of formula (V). 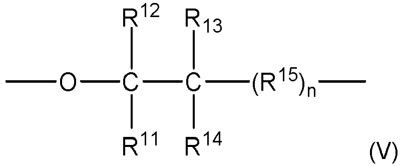 wherein
R¹¹ to R¹⁴ are each independently of one another selected from the group consisting of H, C₁-C₄-alkyl and halogen-substituted C₁-C₄-alkyl;
R¹⁵ is selected from the group consisting of a chemical bond, a (-CR^{15a}R^{15b}-) group and a (-CR^{15a}R^{15b}O-) group,
wherein
R^{15a} and R^{15b} are each independently of one another selected from the group consisting of H and unsubstituted or at least monosubstituted C₁-C₄-alkyl,
wherein the substituents are selected from the group consisting of F, Cl, Br, OH and C₁-C₄-alkyl;
n is 0, 1, 2 or 3.

If n is 0, then R¹⁵ is a chemical bond between the adjacent carbon atom and the oxygen atom. If R¹⁵ is a (-CR^{15a}R^{15b}O-) group, then the oxygen atom (O) of the (-CR^{15a}R^{15b}O-) group is bound to another carbon atom (C) of formula (V) and not to the oxygen atom (O) of formula (V). In other words, formula (V) does not comprise peroxide compounds. The same holds true for formula (VI).

Typical polyethers as well as their preparation are known to the skilled person.

A preferred polyether is, for example, a poly(alkylene glycol), also known as a poly(alkylene oxide).

Polyalkylene oxides and their preparation are known to the skilled person. They are usually synthesized by interaction of water and a bi- or polyvalent alcohol with cyclic ethers, i. e. alkylene oxides, of the general formula (VI). The reaction is catalyzed by an acidic or basic catalyst. The reaction is a so called ring-opening polymerization of the cyclic ether of the general formula (VI). 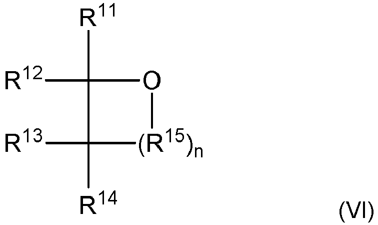 wherein
R¹¹ to R¹⁵ have the same meanings as defined above for formula (V).

A preferred poly(alkylene oxide) is derived from monomers of the general formula (VI) having 2 to 6 carbon atoms in the ring. In other words, preferably, the poly(alkylene oxide) is a poly(C₂-C₆-alkylene oxide). Particular preference is given to a poly(alkylene oxide) derived from monomers selected from the group consisting of 1,3-dioxolane, 1,3-dioxepane and tetrahydrofuran (IUPAC-name: oxolane). In other words, particularly preferably, the poly(alkylene oxide) is selected from the group consisting of poly-1,3-dioxolane, poly-1,3-dioxepane and polytetrahydrofuran.

In one embodiment, the poly(alkylene oxide) can comprise OH-end groups. In another embodiment, at least some of the OH-end groups of the poly(alkylene oxide) can be capped. Methods for capping OH-end groups are known to the skilled person. For example, the OH-end groups can be capped by etherification or esterification.

The weight average molecular weight of the poly(alkylene oxide) is preferably in the range of from 1 000 to 150 000 g/mol, particular preferably from 1 500 to 120 000 g/mol and more preferably in the range of from 2 000 to 100 000 g/mol.

A polyurethane is a polymer having carbamate units. Polyurethanes as well as their preparation is known to the skilled person.

Aliphatic polyurethanes are preferred as polyurethanes. They can, for example, be prepared by polyaddition of aliphatic polyisocyanates and aliphatic polyhydroxy compounds. Among the polyisocyanates, diisocyanates of the general formula (VII) are preferred

OCN-R⁷-NCO (VII),

wherein
R⁷ is a substituted or unsubstituted C₁-C₂₀-alkylene or C₄-C₂₀-cycloalkylene, wherein the substituents are selected from the group consisting of F, CI, Br and C₁-C₆-alkyl.

Preferably R⁷ is a substituted or unsubstituted C₂₋C₁₂-alkylene or C₆-C₁₅-cycloalkylene.

Within the context of the present invention, definitions such as C₁-C₂₀-alkylene means C₁-C₂₀-alkanediyle. The C₁-C₂₀-alkylene is a hydrocarbon having two free valences and a carbon atom number of from 1 to 20. The C₁-C₂₀-alkylene can be branched or unbranched.

Within the context of the present invention, definitions such as C₄-C₂₀-cycloalkylene means C₄-C₂₀-cycloalkanediyle. A C₄-C₂₀-cycloalkylene is a cyclic hydrocarbon having two free valences and a carbon atom number of from 4 to 20. Hydrocarbons having two free valences, a cyclic and also a linear component and a carbon atom number of from 4 to 20 likewise fall under this definition.

Preferred diisocyanates are selected from the group consisting of hexamethylenediisocyanate, 2,2,4-trimethyl hexamethylenediisocyanate, 2,4,4-tri-methyl hexamethylenediisocyanate, 1,2-diisocyanatomethyl cyclohexane, 1,4-diiso-cyanatomethyl cyclohexane and isophorondiisocyanate (IUPAC-name: 5-isocyanato-1-(isocyanatomethyl)-1,3,3-trimethyl-cyclohexane).

The diisocyanates may also be used in oligomeric, for example dimeric or trimeric form. Instead of the polyisocyanates, it is also possible to use conventional blocked polyisocyanates which are obtained from the stated isocyanates, for example by an addition reaction of phenol or caprolactam.

Suitable polyhydroxy compounds for the preparation of aliphatic polyurethanes are, for example, polyesters, polyethers, polyesteramides or polyacetales or mixtures thereof.

Suitable chain extenders for the preparation of the polyurethanes are low molecular weight polyols, in particular diols and polyamines, in particular diamines or water.

The polyurethanes are preferably thermoplastic and therefore, preferably essentially uncrosslinked, i. e. they can be melted repeatedly without significant signs of decomposition. Their reduced specific viscosities are as a rule from 0.5 to 3 dl/g, preferably from 1 to 2 dl/g measured at 30°C in dimethylformamide.

A polyepoxide comprises at least two epoxide groups. The epoxide groups are also known as glycidyl or oxirane groups. "At least two epoxide groups" mean precisely two epoxide groups and also three or more epoxide groups.

Polyepoxides and their preparation is known to the person skilled in the art. For example, polyepoxides are prepared by the reaction of epichlorohydrine (IUPAC-name: chlormethyloxirane) and a diol, a polyol or a dicarboxylic acid. Polyepoxides prepared in this way are polyethers having epoxide end groups.

Another possibility to prepare polyepoxides is the reaction of glycidyl(meth)acrylate (IUPAC-name: oxiran-2-ylmethyl-2-methylprop-2-enoate) with polyolefins or polyacrylates. This results in polyolefins or polyacrylates having epoxy end groups.

Preferably, aliphatic uncrosslinked polyepoxides are used. Copolymers of epichlorohydrine and 2,2-bis-(4-hydroxyphenyl)-propane (bisphenol A) are particularly preferred.

Component (b3) (the at least one further polymer (FP)) can also comprise a polyamide. Aliphatic polyamides are preferred.

The intrinsic viscosity of suitable polyamides is generally from 150 to 350 ml/g, preferably from 180 to 275 ml/g. Intrinsic viscosity is determined here from a 0.5% by weight solution of the polyamide in 96% by weight sulfuric acid at 25°C in accordance with ISO 307.

Preferred polyamides are semicrystalline or amorphous polyamides.

Examples of polyamides suitable as component (b3) are those that derive from lactams having from 7 to 13 ring members. Other suitable polyamides are those obtained through reaction of dicarboxylic acids with diamines.

Examples that may be mentioned of polyamides that derive from lactams are polyamides that derive from polycaprolactam, from polycaprylolactam, and/or from polylaurolactam.

If polyamides are used that are obtainable from dicarboxylic acids and diamines, dicarboxylic acids that can be used are alkanedicarboxylic acids having from 6 to 14 carbon atoms, preferably from 6 to 10 carbon atoms. Aromatic dicarboxylic acids are also suitable.

Examples of dicarboxylic acids that may be mentioned here are adipic acid, azelaic acid, sebacic acid, dodecanedicarboxylic acid, and also terephthalic acid and/or isophthalic acid.

Examples of suitable diamines are alkanediamines, having from 4 to 14 carbon atoms, in particular alkanediamines having from 6 to 8 carbon atoms, and also aromatic diamines, for example m-xylylenediamine, di(4-aminophenyl)methane, di(4-aminocyclohexyl)methane, 2,2-di(4-aminophenyl)propane, 2,2-di(4-aminocyclohexyl)propane, and 1,5-diamino-2-methylpentane.

Other suitable polyamides are those obtainable through copolymerization of two or more of the monomers mentioned above and mentioned below, and mixtures of a plurality of polyamides in any desired mixing ratio.

Preferred polyamides are polyhexamethyleneadipamide, polyhexamethylenesebacamide, and polycaprolactam, and also nylon-6/6,6, in particular having a proportion of from 75 to 95% by weight of caprolactam units.

Particular preference is given to mixtures of nylon-6 with other polyamides, in particular with nylon-6/6,6 (PA 6/66), particular preference being given to mixtures of from 80 to 50% by weight of PA 6 and from 20 to 50% by weight of PA 6/66, where the PA 6/66 comprises from 75 to 95% by weight of caprolactam units, based on the total weight of the PA 6/66 in the mixture.

The following, non-exclusive list comprises the abovementioned polyamides, and other suitable polyamides, and also the monomers comprised.

### AB polymers:

PA 4 Pyrrolidone
PA 6 ε-Caprolactam
PA 7 Ethanolactam
PA 8 Caprylolactam
PA 9 9-Aminopelargonic acid
PA 11 11-Aminoundecanoic acid
PA 12 Laurolactam

### AA/BB polymers:

PA 46 Tetramethylenediamine, adipic acid
PA 66 Hexamethylenediamine, adipic acid
PA 69 Hexamethlyenediamine, azelaic acid
PA 610 Hexamethylenediamine, sebacic acid
PA 612 Hexamethylenediamine, decanedicarboxylic acid
PA 613 Hexamethylenediamine, undecanedicarboxylic acid
PA 1212 1,12-Dodecanediamine, decanedicarboxylic acid
PA 1313 1,13-Diaminotridecane, undecanedicarboxylic acid
PA 6T Hexamethylenediamine, terephthalic acid
PA MXD6 m-Xylylenediamine, adipic acid
PA 6I Hexamethylenediamine, isophthalic acid
PA 6-3-T Trimethylhexamethylenediamine, terephthalic acid
PA 6/6T (see PA 6 and PA 6T)
PA 6/66 (see PA 6 and PA 66)
PA 6/12 (see PA 6 and PA 12)
PA 66/6/610 (see PA 66, PA 6 and PA 610)
PA 6I/6T (see PA 6I and PA 6T)
PA PACM 6 Diaminodicyclohexylmethane, adipic acid
PA PACM 12 Diaminodicyclohexylmethane, laurolactam
PA 6I/6T/PACM as PA 6I/6T + diaminodicyclohexylmethane
PA 9T 1,9-Nonanediamine, terephthalic acid
PA 12/MACMI Laurolactam, dimethyldiaminodicyclohexylmethane, isophthalic acid
PA 12/MACMT Laurolactam, dimethyldiaminodicyclohexylmethane, terephthalic acid
PA PDA-T Phenylenediamine, terephthalic acid

Preferred polyamides are PA 6, PA 66 and PA PACM 6.

Vinyl aromatic polymers are polyolefins having unsubstituted or at least monosubstituted styrene as monomer unit. Suitable substituents are, for example, C₁-C₆-alkyls, F, Cl, Br and OH. Preferred vinyl aromatic polymers are selected from the group consisting of polystyrene, poly-α-methylstyrene and copolymers thereof with up to 30% by weight of comonomers selected from the group consisting of acrylic esters, acrylonitrile and methacrylonitrile.

Vinyl aromatic polymers are commercially available and known to the person skilled in the art. The preparation of these polymers is also known to the person skilled in the art.

Preferably, the vinyl aromatic polymers are prepared by free radical polymerization, for example by emulsion, bead, solution or bulk polymerization. Possible initiators are, depending on the monomers and the type of polymerization, free radical initiators such as peroxide compounds and azo compounds with the amounts of initiator generally being in the range from 0.001 to 0.5% by weight, based on the monomers.

Poly(vinyl esters) and their preparation are known to the skilled person. Poly(vinyl esters) are preferably prepared by polymerization of vinyl esters. In a preferred embodiment of the present invention, the vinyl esters are vinyl esters of aliphatic C₁-C₆ carboxylic acids. Preferred monomers are vinyl acetate and vinyl propionate. These monomers form poly(vinyl acetate) and poly(vinyl propionate) polymers.

Poly(vinyl ethers) are prepared by polymerization of vinyl ether monomers. Poly(vinyl ethers) and their preparation are known to the skilled person. In a preferred embodiment, the vinyl ethers are vinyl ethers of aliphatic C₁-C₈ alkyl ethers. Preferred monomers are methyl vinyl ether and ethyl vinyl ether, forming poly(methyl vinyl ether) and poly(ethyl vinyl ether) during the polymerization.

Preferably, the poly(vinyl ethers) are prepared by free radical polymerization, for example by emulsion, bead, solution, suspension or bulk polymerization. Possible initiators are, depending on the monomers and the type of polymerization, free radical initiators such as peroxide compounds and azo compounds with the amounts of initiator generally being in the range from 0.001 to 0.5% by weight, based on the monomers.

Poly(alkyl(meth)acrylate) within the present invention comprises poly(alkyl acrylate), poly(alkyl methacrylates) and copolymers thereof. Poly(alkyl(meth)acrylate) comprises units derived from monomers of formula (VIII), 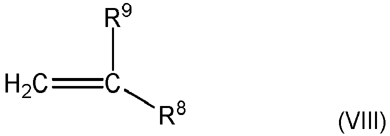 wherein
- R⁸: is selected from the group consisting of H and C₁-C₈-alkyl and
- R⁹: is a radical of formula (IX) 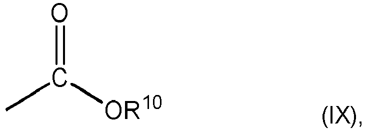
wherein
- R¹⁰: is a C₁-C₁₄-alkyl.

Preferably, R⁸ is selected from the group consisting of H and C₁-C₄-alkyl, particularly preferably R⁸ is H or methyl. Preferably, R¹⁰ is a C₁-C₈-alkyl, particularly preferably, R¹⁰ is methyl or ethyl.

If R⁸ in formula (VIII) is H and R⁹ is a radical of formula (IX) and R¹⁰ in formula (IX) is methyl, then the monomer of formula (VIII) is methyl acrylate.

If R⁸ in formula (VIII) is H and R⁹ is a radical of formula (IX) and R¹⁰ in formula (IX) is ethyl, the monomer of formula (VIII) is ethyl acrylate.

If R⁸ in formula (VIII) is methyl and R⁹ is a radical of formula (IX), then the monomers of formula (VI) are methacrylic esters.

Poly(alkyl(meth)acrylates) comprise as monomers preferably 40 to 100% by weight of methacrylic esters, particularly preferably 70 to 100% by weight of methacrylic esters and more preferably from 80 to 100% by weight of methacrylic esters, each based on the total amount of the poly(alkyl(meth)acrylates).

In another preferred embodiment, the poly(alkyl(meth)acrylates) comprise as monomers from 20 to 100% by weight of methyl acrylate, ethyl acrylate or a mixture thereof, preferably from 40 to 100% by weight of methyl acrylate, ethyl acrylate or a mixture thereof and particularly preferably from 50 to 100% by weight of methyl acrylate, ethyl acrylate or mixtures of thereof, each based on the total weight of the poly(alkyl(meth)acrylate).

Such polymers of monomers of the formula (VIII) with or without further monomers can be prepared in a conventional, preferably a free radical polymerization, for example an emulsion, bead, solution or bulk polymerization (cf. Kirk-Othmer, Encyclopedia of Chemical Technology 3rd Ed., Vol. 1., pp. 330-342, Vol. 18, pp. 720-755, J. Wiley; H. Rauch-Puntigam, Th. Völker, Acryl- und Methacrylverbindungen). Possible initiators depending on the monomers and the type of polymerization are free radical initiators, such as peroxy or peroxo compounds and azo compounds. The amount of initiator in general is within the range from 0.001 to 0.5% by weight, based on the monomers.

Suitable initiators for an emulsion polymerization are, for example, peroxodisulfates and redox systems for a bulk polymerization not only peroxides, such as dibenzoyl peroxide or dilauroyl peroxide, but also azo compounds, for example azobisisobutyrodinitrile, similarly in the case of the solution or bead polymerization. The molecular weight may be regulated using conventional regulators, in particular mercaptans, e. g. dodecylmercaptan.

Preferably, the polymerization is carried out at elevated temperatures, for example above 50°C. The weight average molecular weight (Mw) is in general within the range of from 2 000 to 5 000 000 g/mol, preferably from 20 000 to 3 000 000 g/mol (determination by light scattering; cf. HoubenWeyl, Methoden der Org. Chemie, 4th edition, Volume 14/1, Georg Thieme-Verlag Stuttgart 1961).

The person skilled in the art knows that the monomers described above for the preparation of the components (b1), (b2) and (b3) can undergo changes in their structure during the polymerization reaction. Consequently, the building units of the polymers are not the same as the monomers from which they are derived. However, the person skilled in the art knows which monomers correspond to which building unit of the polymers.

Under the conditions of compounding or processing by three-dimensional (3D) printing, virtually no transacetalization occurs between component (b1), the polyoxymethylene (POM), and component (b3), the at least one further polymer (FP), i. e. virtually no exchange of comonomer units takes place.

The at least one binder (B) may comprise besides (b1), the components (b2) and/or (b3). In one embodiment, the binder (B) comprises, besides (b1), the components (b2) and/or (b3).

In a preferred embodiment, the at least one binder (B) comprises, besides (b1), 5 to 20 % by weight of component (b2), based on the total weight of the binder (B), and/or from 2 to 30 % by weight of component (b3), based on the total weight of the binder (B).

In another embodiment, the at least one binder (B) comprises, besides (b1), the components (b2) and/or (b3), wherein
(b2) is at least one polyolefin (PO) and
(b3) is at least one further polymer (FP).

In a further preferred embodiment, the at least one binder (B) comprises
(b1) from 50 to 98 % by weight of the at least one polyoxymethylene (POM) based on the total weight of the at least one binder (B),
(b2) from 2 to 50 % by weight of at least one polyolefin (PO) based on the total weight of the at least one binder (B),
(b3) from 0 to 40 % by weight of at least one further polymer (FP) based on the total weight of the at least one binder (B).

The at least one feedstock may have any desired form. Preferably, the at least one feedstock is at least one filament or at least one granulate, more preferably the at least one feedstock is at least one granulate.

"At least one filament" means precisely one filament and also mixtures of two or more filaments. The same applies to the "at least one granulate". "At least one granulate" means precisely one granulate and also mixtures of two or more granulates.

In case, the at least one feedstock is at least one granulate, the at least one granulate is fed into the 3D-printer from a hopper.

The at least one granulate may comprise the at least one binder (B) and the at least one inorganic powder (IP) in any desired amounts.

In a preferred embodiment, the at least one granulate comprises from 30 to 70 % by volume of the at least one inorganic powder (IP) and from 30 to 70 % by volume of the at least one binder (B), preferably from 40 to 65 % by volume of the at least one inorganic powder (IP) and from 35 to 60 % by volume of the at least one binder (B), based on the total volume of the at least one granulate.

In case, the at least one feedstock is at least one filament, the at least one filament is fed into the 3D-printer by rolling from a spool.

The filament may have any diameter deemed as appropriate by the person skilled in the art. Preferably, the diameter of the at least one filament is 1.5 to 3.5 mm, more preferably 1.6 to 3.2 mm and most preferably 1.7 to 3.1 mm.

In a preferred embodiment, the at least one filament comprises from 30 to 70 % by volume of the at least one inorganic powder (IP) and from 30 to 70 % by volume of the at least one binder (B), preferably from 40 to 65 % by volume of the at least one inorganic powder (IP) and from 35 to 60 % by volume of the at least one binder (B), based on the total volume of the at least one filament.

In another preferred embodiment, the at least one filament comprises a core material (CM) coated with a layer of shell material (SM), wherein
the core material (CM) comprises from 30 to 70 % by volume of the at least one inorganic powder (IP), and from 30 to 70 % by volume of the at least one binder (B), based on the total volume of the core material (CM),
   and
the shell material (SM) comprises from 75 to 100 % by volume of at least one thermoplastic polymer (TP), from 0 to 20 % by volume of the at least one inorganic powder (IP), and from 0 to 25 % by volume of at least one additive, based on the total weight of the shell material (SM).

The layer of shell material (SM) may have any thickness deemed as appropriate by the person skilled in the art. Preferably, the thickness of the layer of shell material (SM) is 0.01 to 0.5 mm, more preferably 0.02 to 0.3 mm, most preferably 0.025 to 0.25 mm.

The core material (CM) may have any diameter deemed as appropriate by the person skilled in the art. Preferably, the diameter of the core material is 1.3 to 3.0 mm, more preferably 1.4 to 2.95 mm, and most preferably 1.5 to 2.9 mm.

The shell material (SM) comprises from 75 to 100 % by volume, preferably from 85 to 100 % by volume, more preferably from 95 to 100 % by volume, based on the total volume of the shell material (SM), of at least one thermoplastic polymer (TP).

As thermoplastic polymer (TP), the person skilled in the art may select any technically appropriate thermoplastic polymer.

The thermoplastic polymer (TP) may be identical with one of the polymers used in the at least one binder (B).

"At least one thermoplastic polymer (TP)" within the present invention means precisely one thermoplastic polymer (TP) and also mixtures of two or more thermoplastic polymers (TP).

The at least one thermoplastic polymer (TP) may comprise thermoplastic homopolymers, thermoplastic copolymers, as well as blends of thermoplastic polymers.

Preferably, the thermoplastic polymer (TP) of the shell material (SM) is selected from the group of polyoxymethylene (POM), polyolefins (PE) such as polypropylene, polyurethanes (PU), polyamides (PA), polyethers (PETH), polycarbonates (PC), and/or polyesters (PES), such as polylactic acid and blends thereof.

More preferably the thermoplastic polymer (TP) is selected from the group of polyoxymethylene (POM), polypropylene and/or polylactic acid (PLA) and blends thereof.

The shell material (SM) further comprises from 0 to 20% by volume, based on the total volume of the shell material (SM), of the at least one inorganic powder (IP).

The at least one inorganic powder (IP) in the shell material (SM) is identical to the inorganic powder (IP) in the core material (CM).

Preferably, the shell material (SM) does not contain any of the at least one inorganic powder (IP).

However, in the embodiment of the filament wherein the shell material (SM) does not contain any of the at least one inorganic powder (IP), there may be traces of inorganic powder (IP) present in the shell material (SM) of less than 1% by volume, based on the total volume of the shell material (SM).

The shell material (SM) further comprises from 0 to 25 % by volume, preferably from 0 to 15 % by volume, more preferably from 0 to 5% by volume, based on the total weight of the shell material (SM) of at least one additive (A).

"At least one additive (A)" according to the present invention means precisely one additive (A) and also mixtures of two or more additives (A).

Preferably, the at least one additive (A) is selected from the group consisting of dispersants, stabilizers, pigments and tackifiers.

The additive (A) can be selected from among known dispersants. Examples are oligomeric polyethylene oxide having a low molecular weight of from 200 to 600 g/mol, stearic acid, stearamides, hydroxystearic acids, fatty alcohols, fatty alcohol, fatty acid esters, sulfonates and block copolymers of ethylene oxide and propylene oxide and also, particularly preferably, polyisobutylene.

Further, the additive (A) may be selected from stabilizers, like UV-stabilizers and/or antioxidants.

The additive (A) may also be selected from pigments, such as organic dyes and/or inorganic pigments.

Further, the additive (A) may be selected from tackifiers, like polymers with a glass transition temperature below room temperature, which is preferably below 25°C and/or terpene derivatives.

The additive (A) may also be selected from the tackifiers as disclosed in WO 2013/117428 A1. An example for a commercially available tackifier is Acronal^{®} A107.

Based on WO 2013/117428 A1 and applying the definitions of the components of the tackifiers in WO 2013/117428 A1, as tackifiers preferably dispersions are applied comprising at least one in water soluble dispersed polymerisate with a weighted average molecular weight of less than 50 000 g/mol and a glass transition temperature higher or equal to -40°C to lower or equal 0°C, preferably higher or equal -35°C or equal 0°C, preferably of a monomer mixture comprising
(c1a) at least 40% by weight of at least one C1 to C20-alkyl (meth)acrylate
(c1b) 0 to 30% by weight of at least one vinyl aromate
(c1c) at least 0.1 % by weight of at least one acid monomer
(c1d) 0 to 50% by weight of further monomers,
wherein the amounts of the monomers are based on the sum of all monomers.

Furthermore, tackifiers may be applied as disclosed in US 4,767,813 and as specified in the following three paragraphs.

According to US 4,767,813, the tackifier may be rosin or a derivative of rosin having a ring and ball softening temperature from about 25° to 110°C., preferably from about 50° to 110°C.

Suitable tackifiers include rosin, hydrogenated rosin esters, glycerol of rosin such as triglycerol rosin esters, C₂₋₃ alkylene esters of rosin such as triethylene glycol esters of rosin and tripropylene glycol esters of rosin; rosin salts, disproportionated rosin salts, pentaerythritol and the polyterpene resins including alpha and beta pinene. Suitable resins are sold under the tradenames Staybelite Ester 3, Staybelite Ester 10, Pentalyn H and Hercolyn D.

The tackifier resin may be a C₅ or C₉ synthetic tackifier resin having a ring and ball softening point from about 10° to 100°C., preferably from about 50° to 100°C. Suitable resins are sold under the tradenames *Piccovar*, *Hercotac*, *Picconal* and *Piccolyte.* These tackifiers are polymerized from C₉ monomers, preferably aromatic and C₅ monomers, preferably aliphatic.

### Step b)

According to step b), the at least one feedstock is heated inside the 3D printer.

The heating of the at least one feedstock according to step b) is preferably carried out inside of the at least one nozzle of the 3D printer.

To this degree, the at least one nozzle is preferably heated so that the at least one feedstock is present within the at least one nozzle in molten form, for example, the at least one nozzle is heated by electric heaters. The heat of the electric heaters in the at least one nozzle is preferably isolated, so that the at least one feedstock does not soften prior to reaching the at least one nozzle.

The at least one nozzle thus, preferably has at least two regions, with the at least one feedstock being in solid form in the first region and the at least one feedstock being present in molten form in the second region of the at least one nozzle. Within the nozzle, the transition between the solid condition and the molten condition of the at least one feedstock is continuous.

Preferably, the at least one feedstock is heated to a temperature above the melting temperature of the at least one binder (B). In case, the at least one feedstock is at least one filament comprising a core material (CM) and a shell material (SM), the at least one feedstock is heated to a temperature above the melting temperature of the at least one binder (B) and the at least one thermoplastic polymer (TP).

Methods for the determination of the melting temperatures of the at least one binder (B) and the at least one thermoplastic polymer (TP) are known to the skilled person. For example, the melting temperature of the at least one binder (B) and the at least one thermoplastic polymer (TP) can be estimated by differential scanning calorimetry (DSC).

In a preferred embodiment of the inventive process, in process step b), the at least one feedstock is heated to a temperature that is at least 1°C, preferably at least 5°C and particularly preferably at least 10°C above the melting point of the at least one binder (B).

In another preferred embodiment, the at least one feedstock is heated to a temperature in the range of from 140 to 250°C, preferably of from 160 to 245°C.

### Step c)

In step c), the at least one heated feedstock obtained in step b) is extruded through the at least one nozzle to obtain at least one extruded strand.

The at least one extruded strand generally quickly hardens after the extrusion through the at least one nozzle and is extruded in roughly the same thickness as the nozzle feed diameter. Preferably, the thickness of the at least one extruded strand is in the range of from 20 µm to 1.5 mm, preferably in the range from 100 µm to 800 µm.

The total surface area of the at least one extruded strand is preferably composed of the at least one inorganic powder (IP), the at least one binder (B), if present, the at least one thermoplastic polymer (TP) and, if present, the at least one additive (A).

The area on the surface of the at least one extruded strand which is covered by the at least one inorganic powder (IP) preferably makes up at least 30%, more preferably at least 35% of the total surface area of the at least one extruded strand.

Moreover, the area on the surface of the at least one extruded strand which is covered by the at least one inorganic powder (IP) preferably makes up not more than 80%, more preferably not more than 70% of the total surface area of the at least one extruded strand.

In a preferred embodiment, the area on the surface of the at least one extruded strand which is covered by the at least one inorganic powder (IP) preferably makes up from 30 to 80%, more preferably from 35 to 70% of the total surface area of the at least one extruded strand.

If the at least one inorganic powder (IP) is selected from the group consisting of a metal or a metal alloy, the surface area of the at least one inorganic powder (IP) relative to the total surface area of the at least one extruded strand can be determined by scanning electron microscopy (SEM).

### Step d)

According step d), the three-dimensional green body (GB) is formed layer by layer from the at least one extruded strand obtained in step c). The formation of the three-dimensional green body (GB) is usually carried out using the "layer-based additive technique" by depositing the extruded strand on a base plate (BP) located in the build chamber.

The "layer-based additive technique", for the purpose of the present invention is a technique wherein a first layer of extruded strands is deposited on a base plate (BP) in a build chamber to form a first layer of extruded strands, followed by the deposition of a second layer of extruded strands on the first layer of extruded strands, followed by the deposition of a third layer of extruded strands and so on. The number of layers deposited by the layer-based additive technique depends on the size of the three-dimensional green body (GB). Moreover, the number of layers depends on the thickness of the layers deposited.

The layer thickness is usually in the same range as the thickness of the at least one extruded strand obtained in step c).

The temperature of the building chamber is usually in the range of from 20 to 100°C, preferably of from 40 to 90°C and particularly preferably of from 50 to 80°C.

In summary, in steps a) to d) of the process of the present invention, the at least one feedstock generally is initially present in a solid state and thereafter melted, then subsequently printed by extruding strands, which are then applied layer by layer to form the three-dimensional green body (GB).

The three-dimensional green body (GB) is formed layer by layer on a base plate (BP). The base plate (BP) is located in the built chamber.

The base plate (BP) comprises the at least one binder (B) and optionally the at least one inorganic powder (IP). It may comprise the at least one binder (B) and optionally the at least one inorganic powder (IP) in any desired amounts.

Preferably, the base plate (BP) comprises from 0 to 70 % by volume of the at least one inorganic powder (IP) and from 30 to 100 % by volume of the at least one binder (B), more preferably from 30 to 70 % by volume of the at least one inorganic powder (IP) and from 30 to 70 % by volume of the at least one binder (B) and most preferably from 40 to 65 % by volume of the at least one inorganic powder (IP) and from 35 to 60 % by volume of the at least one binder (B), based in each case on the total volume of the base plate (BP).

The base plate (BP) can be prepared by injection molding or by extrusion, more preferably by injection molding. It may have any desired thickness. Preferably, it has a thickness of from 0.5 to 20 mm, more preferably of from 1 to 15 mm and most preferably of from 1 to 10 mm.

Preferably, the base plate (BP) is not irreversibly fixed in the built chamber which means that it can be removed from the built chamber without damage.

In a preferred embodiment, during steps a) to d), the base plate (BP) is fixed on a base located in the built chamber by clamps. The base is preferably irreversibly fixed in the built chamber.

### Step e)

According to step e), the three-dimensional green body (GB) and the base plate (BP) are removed from the built chamber, wherein the three-dimensional green body (GB) is attached to the base plate (BP).

For the purpose of the present invention, the term "attached" means that preferably at least 90 % of the lower surface of the three-dimensional green body (GB) are fixed to the base plate (BP), more preferably at least 95 % and most at least 99 %, based on the total lower surface of the three-dimensional green body (GB).

Preferably, the three-dimensional green body (GB) and the base plate (BP) are removed from the built chamber by removing the clamps by which the base plate (BP) is fixed on the base.

Thus, it is possible that a new base plate (BP) for the production of a new three-dimensional body (GB) can be fixed on the base.

In a preferred embodiment, step e) is followed by steps f2) to h2)
f2) separating the three-dimensional green body (GB) from the base plate (BP),
g2) debinding the three-dimensional green body (GB), wherein a three-dimensional brown body (BB) is formed from the three-dimensional green body (GB), and
h2) sintering the three-dimensional brown body (BB), wherein a three-dimensional sintered body is formed from the three-dimensional brown body (BB).

In another more preferred embodiment, step e) is followed by steps f1) to h1)
f1) debinding the base plate (BP) and the three-dimensional green body (GB) attached to the base plate (BP), wherein a three-dimensional brown body (BB) is formed from the three-dimensional green body (GB),
g1) sintering the base plate (BP) and the three-dimensional brown body (BB) attached to the base plate (BP), wherein a three-dimensional sintered body is formed from the three-dimensional brown body (BB), and
h1) separating the three-dimensional sintered body from the base plate (BP).

### Steps f1) and g2)

According to steps f1) or g2), respectively, the three-dimensional green body (GB) and, optionally, the base plate (BP) are debinded.

"Debinding" for the purpose of the present invention means that at least a part of the binder (B) and/or if present, at least a part of the thermoplastic polymer (TP) are removed from the three-dimensional green body (GB) in order to form a three-dimensional brown body (BB).

After the at least partial removal of the binder (B) and/or, if present, at least a part of the thermoplastic polymer (TP), the resulting three-dimensional object is called a "three-dimensional brown body". The three-dimensional brown body (BB) comprises the inorganic powder (IP), the fraction of the binder (B) and, if present, the fraction of the thermoplastic polymer (TP) which were not removed during steps f1) or g2), respectively.

To remove at least a part of the binder (B) in steps f1) or g2), respectively, and/or, if present, at least a part of the thermoplastic polymer (TP), the three-dimensional green body obtained by the three-dimensional (3D) printing process is preferably treated with an atmosphere comprising gaseous acid. Appropriate processes are described, for example, in US 2009/0288739 and US 5,145,900. Steps f1) or g2), respectively, are preferably carried out at temperatures below the melting temperature of the binder (B). Steps f1) or g2), respectively, are preferably carried out at a temperature at least 1°C below the melting point of the binder (B), preferably at least 5°C below the melting point of the binder (B) and particularly preferably at least 10°C below the melting point of the binder (B).

In general, steps f1) or g2), respectively, are carried out at a temperature in the range of from 20 to 180°C and particularly preferably of from 100 to 150°C. Preferably, f1) or g2), respectively, are carried out for a period of from 0.1 to 24h, particularly preferably of from 0.5 to 12h.

The required treatment time depends on the treatment temperature and the concentration of the acid in the treatment atmosphere and also on the size of the three-dimensional green body (GB).

Suitable acids for steps f1) or g2), respectively, of the present invention are, for example, inorganic acids which are either gaseous at room temperature or can be vaporized at the treatment temperature or below. Examples are hydrogen halides and nitric acid. Hydrogen halides are hydrogen fluoride, hydrogen chloride, hydrogen bromide and hydrogen iodide. Suitable organic acids are those, which have a boiling point at atmosphere pressure of less than 130°C, e. g. formic acid, acetic acid or trifluoroacetic acid and mixtures thereof. Acids with boiling points above 130°C, for example methanesulfonic acid, can also be utilized in steps f1) or g2), respectively, when dosed as a mixture with a lower boiling acid and/or water.

Preferred acids for steps f1) or g2), respectively, are nitric acid, a 10% by weight solution of oxalic acid in water or a mixture of 50% by volume of methanesulfonic acid in water.

Furthermore, BF₃ and its adducts with inorganic ethers can be used as acids.

If a carrier gas is used, the carrier gas is generally passed through the acid and loaded with the acid beforehand. The carrier gas, which has been loaded in this way with the acid, is then brought to the temperature at which steps f1) or g2), respectively, are carried out. This temperature is advantageously higher than the loading temperature in order to avoid condensation of the acids. Preferably, the temperature at which steps f1) or g2), respectively, are carried out is at least 1°C, particularly preferably at least 5°C and most preferably at least 10°C higher than the loading temperature.

Preference is given to mixing the acid into the carrier gas by means of a metering device and heating the gas mixture to such a temperature that the acid can no longer condense. Preferably, the temperature is at least 1°C, particularly preferably at least 5°C and most preferably at least 10°C higher than the sublimation and/or vaporization temperature of the acid and/or the carrier gas.

The carrier gas in general is any gas that is inert under the reaction conditions of steps f1) or g2), respectively. A preferred carrier gas is nitrogen.

It is known to the person skilled in the art that not all components which may be comprised by the binder (B) and/or, if present, the thermoplastic polymer (TP) in different embodiments of the invention are removable in steps f1) or g2), respectively, due to their chemical and physical properties.

Therefore, the part of binder (B) and/or, if present, the part of the thermoplastic polymer (TP) which can be removed in steps f1) or g2), respectively, in different embodiments of the invention may vary depending on the specific compounds used.

Preferably, steps f1) or g2), respectively, are continued until the binder (B) and/or, if present, the thermoplastic polymer (TP) have been removed to an extent of at least 40% by weight, more preferably at least 60% by weight, most preferably at least 80% by weight, particularly preferably at least 90% by weight and more particularly preferably at least 95% by weight, based on the total weight of the binder (B) and/or, if present, the thermoplastic polymer (TP). This can be checked, for example, with the height of the weight decrease.

It is known to the person skilled in the art that at the temperatures of steps f1) or g2), respectively, the inorganic powder (IP) comprised in the three-dimensional green body (GB) can undergo chemical and/or physical reactions. In particular, the particles of the inorganic powder (IP) can fuse together and the inorganic powder can undergo solid state phase transitions.

The same holds true for the binder (B) and, if present, the thermoplastic polymer (TP). During steps f1) or g2), respectively, the composition of the binder (B) can change.

Consequently, in one embodiment of the present invention, the inorganic powder (IP), the binder (B) and/or, if present, the thermoplastic polymer (TP) comprised in the three-dimensional green body (GB) obtained in step e) differs from the inorganic powder (IP) and/or the binder (B) comprised in the three-dimensional brown body obtained in steps f1) or g2), respectively.

### Steps g1) and h2)

Steps f1) or g2), respectively, can be followed by steps g1) or h2), respectively, in which the three-dimensional brown body is sintered to form a three-dimensional sintered body. Steps g1) or h2), respectively, are also called sintering. The terms "step g1)" or "step h2)", respectively, and "sintering" for the purpose of the present invention are synonymous and are used interchangeably throughout the present invention.

In one embodiment, the three-dimensional brown body (BB) may comprise parts in which the inorganic powder (IP) is selected from the group consisting of a metal and a metal alloy and parts in which the inorganic powder (IP) is a ceramic material precursor. The parts in which the inorganic powder (IP) is a ceramic material precursor may be removed from the three-dimensional brown body prior to or after the sintering. Preferably, the parts in which the inorganic powder (IP) is a ceramic material precursor are removed after the sintering.

After the sintering, the three-dimensional object is a three-dimensional sintered body. The three-dimensional sintered body comprises the inorganic powder (IP) and is essentially free of the binder (B) and, if it was still present in the three-dimensional brown body, the thermoplastic polymer (TP).

"Essentially free of the binder (B) and the thermoplastic polymer (TP)" within the context of the present invention means that the three-dimensional sintered body comprises less than 5% by volume, preferably less than 2% by volume, particularly preferably less than 0.5% by volume and most preferably less than 0.01% by volume of the binder (B) and the thermoplastic polymer (TP).

It is known to the skilled person that during the sintering process the inorganic powder (IP) is sintered together to give a sintered inorganic powder. Furthermore, during the sintering process the inorganic powder (IP) can undergo chemical and/or physical reactions. Consequently, the inorganic powder (IP) comprised in the three-dimensional brown body (BB) usually differs from the sintered inorganic powder comprised in the three-dimensional sintered body.

In one embodiment of the present invention, after steps f1) or g2), respectively, and before step g1) or step h2), respectively, the three-dimensional brown body (BB) obtained in process steps f1) or g2), respectively, is heated for preferably 0.1 to 12h, particularly preferably from 0.3 to 6h, at a temperature of preferably from 250 to 700°C, particularly preferably from 250 to 600°C to remove the residual binder (B) and, if present, the residual thermoplastic polymer (TP) completely.

The temperature as well as the duration and the atmosphere during step g1) or step h2), respectively, depend on the inorganic powder (IP) comprised in the at least one feedstock. The temperature program of the sintering process, the duration and the atmosphere is in general adapted to the needs of the inorganic powder (IP) comprised in the at least one feedstock. Suitable conditions for step g1) or step h2), respectively, are known to the skilled person.

In general, step g1) or step h2), respectively, is carried out under the atmosphere of a gas that is inert with regard to the inorganic powder (IP) and the binder (B). Typical inert gases are for example nitrogen and/or argon.

Depending on the inorganic powder (IP) comprised in the at least one feedstock, it is also possible to carry out step g1) or step h2), respectively, in air, under vacuum or in hydrogen atmosphere.

The temperature in step g1) or step h2), respectively, is in general in the range of from 750 to 1600°C, preferably of from 800 to 1500°C and particularly preferably of from 850 to 1450 °C.

### Steps h1) and f2)

In step h1), the three-dimensional sintered body is separated from the base plate (BP) and, respectively in step h2), the three-dimensional green body is separated from the base plate (BP).

Preferably, the separating is carried out mechanically, more preferably by breaking, sawing, milling, grinding and/or jiggering.

## Claims

1. A process for the production of a three-dimensional green body (GB) by a three-dimensional (3D) printing process employing at least one feedstock, a built chamber and a three-dimensional extrusion printer (3D printer) containing at least one nozzle, the process comprising the following steps a) to e):
a) feeding the at least one feedstock into the 3D printer containing the at least one nozzle, wherein the at least one feedstock comprises at least one binder (B) and at least one inorganic powder (IP), and wherein the at least one binder (B) comprises at least one polyoxymethylene (POM),
b) heating the at least one feedstock inside the 3D printer,
c) extruding the at least one heated feedstock obtained in step b) through the at least one nozzle in order to obtain at least one extruded strand,
d) forming the three-dimensional green body (GB) layer by layer from the at least one extruded strand obtained in step c) on a base plate (BP) located in the build chamber, wherein the base plate (BP) comprises the at least one binder (B) and optionally the at least one inorganic powder (IP), and
e) removing the three-dimensional green body (GB) and the base plate (BP) from the build chamber, wherein the three-dimensional green body (GB) is attached to the base plate (BP).

2. The process according to claim 1, wherein
i) the particle size of the at least one inorganic powder (IP) is from 0.1 to 80 µm, preferably from 0.5 to 50 µm, more preferably from 1 to 30 µm, and/or
ii) the at least one inorganic powder (IP) is a powder of at least one inorganic material selected from the group consisting of a metal, a metal alloy and a ceramic material precursor, and/or
iii) in step b), the at least one feedstock is heated to a temperature above the melting temperature of the at least one binder (B), and/or
iv) the heating of the at least one feedstock according to step b) is carried out inside of the at least one nozzle.

3. The process according to claim 1 or 2, wherein the at least one feedstock is at least one filament.

4. The process according to claim 3, wherein
i) the at least one filament comprises from 30 to 70 % by volume of the at least one inorganic powder (IP) and from 30 to 70 % by volume of the at least one binder (B), preferably from 40 to 65 % by volume of the at least one inorganic powder (IP) and from 35 to 60 % by volume of the at least one binder (B), based on the total volume of the at least one filament, and/or
ii) the diameter of the at least one filament is 1.5 to 3.5 mm, preferably 1.6 to 3.2 mm, more preferably 1.7 to 3.1 mm.

5. The process according to claim 3, wherein the at least one filament comprises a core material (CM) coated with a layer of shell material (SM), wherein
the core material (CM) comprises from 30 to 70% by volume of the at least one inorganic powder (IP) and from 30 to 70% by volume of the at least one binder (B), based on the total volume of the core material (CM),
and
the shell material (SM) comprises from 75 to 100% by volume of at least one thermoplastic polymer (TP), from 0 to 20% by volume of the at least one inorganic powder (IP) and from 0 to 25% by volume of at least one additive (A), based on the total weight of the shell material (SM).

6. The process according to claim 5, wherein
i) the diameter of the at least one filament is 1.5 to 3.5 mm, preferably 1.6 to 3.2 mm, more preferably 1.7 to 3.1 mm, and/or
ii) the diameter of the core material (CM) is 1.3 to 3.0 mm, preferably 1.4 to 2.95 mm, more preferably 1.5 to 2.9 mm, and/or
iii) the thickness of the layer of shell material (SM) is 0.01 to 0.5 mm, preferably 0.02 to 0.3 mm, more preferably 0.025 to 0.25 mm, and/or
iv) the at least one thermoplastic polymer (TP) of the shell material (SM) is selected from the group of polyoxymethylene (POM), polyolefins (PE) such as polypropylene, polyurethanes (PU), polyamides (PA), polyethers (PETH), polycarbonates (PC), and/or polyesters (PES), such as polylactic acid and blends thereof, and/or
v) the at least one additive (A) of the shell material (SM) is selected from the group consisting of dispersants, stabilizers, pigments and tackifiers.

7. The process according to claim 1 or 2, wherein the at least one feedstock is at least one granulate.

8. The process according to claim 7, wherein the at least one granulate comprises from 30 to 70 % by volume of the at least one inorganic powder (IP) and from 30 to 70 % by volume of the at least one binder (B), preferably from 40 to 65 % by volume of the at least one inorganic powder (IP) and from 35 to 60 % by volume of the at least one binder (B), based on the total volume of the at least one granulate.

9. The process according to any one of claims 1 to 8, wherein the base plate (BP) comprises from 0 to 70 % by volume of the at least one inorganic powder (IP) and from 30 to 100 % by volume of the at least one binder (B), preferably from 30 to 70% by volume of the at least one inorganic powder (IP) and from 30 to 70 % by volume of the at least one binder (B) and more preferably from 40 to 65 % by volume of the at least one inorganic powder (IP) and from 35 to 60 % by volume of the at least one binder (B), based on the total volume of the base plate (BP).

10. The process according to any one of claims 1 to 9, wherein the at least one binder (B) comprises
(b1) from 50 to 98 % by weight of the at least one polyoxymethylene (POM) based on the total weight of the at least one binder (B),
(b2) from 2 to 50 % by weight of at least one polyolefin (PO) based on the total weight of the at least one binder (B),
(b3) from 0 to 40 % by weight of at least one further polymer (FP) based on the total weight of the at least one binder (B).

11. The process according to claim 10, wherein the further polymer (FP) is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl (meth)acrylate) and copolymers thereof.

12. The process according to any one of claims 1 to 11, wherein the base plate (BP)
i) has a thickness of from 0.5 to 20 mm, preferably of from 1 to 15 mm and more preferably of from 1 to 10 mm, and/or
ii) is prepared by injection molding or by extrusion, preferably by injection molding.

13. The process according to any one of claims 1 to 12, wherein step e) is followed by steps f1) to h1)
f1) debinding the base plate (BP) and the three-dimensional green body (GB) attached to the base plate (BP), wherein a three-dimensional brown body (BB) is formed from the three-dimensional green body (GB),
g1) sintering the base plate (BP) and the three-dimensional brown body (BB) attached to the base plate (BP), wherein a three-dimensional sintered body is formed from the three-dimensional brown body (BB), and
h1) separating the three-dimensional sintered body from the base plate (BP).

14. The process according to any one of claims 1 to 12, wherein step e) is followed by steps f2) to h2)
f2) separating the three-dimensional green body (GB) from the base plate (BP),
g2) debinding the three-dimensional green body (GB), wherein a three-dimensional brown body (BB) is formed from the three-dimensional green body (GB), and
h2) sintering the three-dimensional brown body (BB), wherein a three-dimensional sintered body is formed from the three-dimensional brown body (BB).

15. The process according to claim 13 or 14, wherein the separating is carried out mechanically, preferably by breaking, sawing, milling, grinding and/or jiggering.

## Patentansprüche

1. Verfahren zur Herstellung eines dreidimensionalen Grünkörpers (GB) mittels eines dreidimensionalen (3D) Druckverfahrens, das mindestens ein Einsatzmaterial, eine Baukammer und einen dreidimensionalen Extrusionsdrucker (3D-Drucker) verwendet, der mindestens eine Düse enthält, wobei das Verfahren die folgenden Schritte a) bis e) umfasst:
a) Einspeisen des mindestens einen Einsatzmaterials in den 3D-Drucker, der die mindestens eine Düse enthält, wobei das mindestens eine Einsatzmaterial mindestens ein Bindemittel (B) und mindestens ein anorganisches Pulver (IP) umfasst, und wobei das mindestens eine Bindemittel (B) mindestens ein Polyoxymethylen (POM) umfasst,
b) Erwärmen des mindestens einen Einsatzmaterials innerhalb des 3D-Druckers,
c) Extrudieren des mindestens einen erwärmten Einsatzmaterials, das in Schritt b) erhalten wurde, durch die mindestens eine Düse, um mindestens einen extrudierten Strang zu erhalten,
d) Bilden des dreidimensionalen Grünkörpers (GB) Schicht für Schicht aus dem mindestens einen extrudierten Strang, der in Schritt c) erhalten wurde, auf einer Grundplatte (BP), die sich in der Baukammer befindet, wobei die Grundplatte (BP) das mindestens eine Bindemittel (B) und gegebenenfalls das mindestens eine anorganische Pulver (IP) umfasst, und
e) Entfernen des dreidimensionalen Grünkörpers (GB) und der Grundplatte (BP) aus der Baukammer, wobei der dreidimensionale Grünkörper (GB) an der Grundplatte (BP) befestigt ist.

2. Verfahren nach Anspruch 1, wobei
i) die Partikelgröße des mindestens einen anorganischen Pulvers (IP) 0,1 bis 80 µm, vorzugsweise 0,5 bis 50 µm, bevorzugter 1 bis 30 µm beträgt, und/oder
ii) das mindestens eine anorganische Pulver (IP) ein Pulver aus mindestens einem anorganischen Material ausgewählt aus der Gruppe bestehend aus einem Metall, einer Metalllegierung und einem Keramikmaterialvorläufer ist, und/oder
iii) in Schritt b) das mindestens eine Einsatzmaterial auf eine Temperatur oberhalb der Schmelztemperatur des mindestens einen Bindemittels (B) erwärmt wird, und/oder
iv) das Erwärmen des mindestens einen Einsatzmaterials gemäß Schritt b) innerhalb der mindestens einen Düse durchgeführt wird.

3. Verfahren nach Anspruch 1 oder 2, wobei das mindestens eine Einsatzmaterial mindestens ein Filament ist.

4. Verfahren nach Anspruch 3, wobei
i) das mindestens eine Filament 30 bis 70 Vol.% des mindestens einen anorganischen Pulvers (IP) und 30 bis 70 Vol.% des mindestens einen Bindemittels (B) umfasst, vorzugsweise 40 bis 65 Vol.% des mindestens einen anorganischen Pulvers (IP) und 35 bis 60 Vol.% des mindestens einen Bindemittels (B), bezogen auf das Gesamtvolumen des mindestens einen Filaments, und/oder
ii) der Durchmesser des mindestens einen Filaments 1,5 bis 3,5 mm, vorzugsweise 1,6 bis 3,2 mm, bevorzugter 1,7 bis 3,1 mm beträgt.

5. Verfahren nach Anspruch 3, wobei das mindestens eine Filament ein Kernmaterial (CM) umfasst, welches mit einer Schicht aus Mantelmaterial (SM) beschichtet ist, wobei
das Kernmaterial (CM) 30 bis 70 Vol.% des mindestens einen anorganischen Pulvers (IP) und 30 bis 70 Vol.% des mindestens einen Bindemittels (B) umfasst, bezogen auf das Gesamtvolumen des Kernmaterials (CM),
und
das Mantelmaterial (SM) 75 bis 100 Vol.% von mindestens einem thermoplastischen Polymer (TP), 0 bis 20 Vol.% des mindestens einen anorganischen Pulvers (IP) und 0 bis 25 Vol.% des mindestens einen Additivs (A) umfasst, bezogen auf das Gesamtgewicht des Mantelmaterials (SM).

6. Verfahren nach Anspruch 5, wobei
i) der Durchmesser des mindestens einen Filaments 1,5 bis 3,5 mm, vorzugsweise 1,6 bis 3,2 mm, bevorzugter 1,7 bis 3,1 mm ist, und/oder
ii) der Durchmesser des Kernmaterials (CM) 1,3 bis 3,0 mm, vorzugsweise 1,4 bis 2,95 mm, bevorzugter 1,5 bis 2,9 mm ist, und/oder
iii) die Dicke der Schicht des Mantelmaterials (SM) 0,01 bis 0,5 mm, vorzugsweise 0,02 bis 0,3 mm, bevorzugter 0,025 bis 0,25 mm ist, und/oder
iv) das mindestens eine thermoplastische Polymer (TP) des Mantelmaterials (SM) ausgewählt ist aus der Gruppe von Polyoxymethylen (POM), Polyolefinen (PE) wie Polypropylen, Polyurethanen (PU), Polyamiden (PA), Polyethern (PETH), Polycarbonaten (PC) und/oder Polyestern (PES), wie Polymilchsäure und Gemischen davon, und/oder
v) das mindestens eine Additiv (A) des Mantelmaterials (SM) ausgewählt ist aus der Gruppe bestehend aus Dispergiermitteln, Stabilisatoren, Pigmenten und Klebrigmachern.

7. Verfahren nach Anspruch 1 oder 2, wobei das mindestens eine Einsatzmaterial mindestens ein Granulat ist.

8. Verfahren nach Anspruch 7, wobei das mindestens eine Granulat 30 bis 70 Vol.% des mindestens einen anorganischen Pulvers (IP) und 30 bis 70 Vol.% des mindestens einen Bindemittels (B) umfasst, vorzugsweise 40 bis 65 Vol.% des mindestens einen anorganischen Pulvers (IP) und 35 bis 60 Vol.% des mindestens einen Bindemittels (B), bezogen auf das Gesamtvolumen des mindestens einen Granulats.

9. Verfahren nach einem der Ansprüche 1 bis 8, wobei die Grundplatte (BP) 0 bis 70 Vol.% des mindestens einen anorganischen Pulvers (IP) und 30 bis 100 Vol.% des mindestens einen Bindemittels (B) umfasst, vorzugsweise 30 bis 70 Vol.% des mindestens einen anorganischen Pulvers (IP) und 30 bis 70 Vol.% des mindestens einen Bindemittels (B), und bevorzugter 40 bis 65 Vol.% des mindestens einen anorganischen Pulvers (IP) und 35 bis 60 Vol.% des mindestens einen Bindemittels (B), bezogen auf das Gesamtvolumen der Grundplatte (BP).

10. Verfahren nach einem der Ansprüche 1 bis 9, wobei das mindestens eine Bindemittel (N) umfasst:
(b1) 50 bis 98 Gew.% des mindestens einen Polyoxymethylens (POM), bezogen auf das Gesamtgewicht des mindestens einen Bindemittels (B),
(b2) 2 bis 50 Gew.% des mindestens einen Polyolefins (PO), bezogen auf das Gesamtgewicht des mindestens einen Bindemittels (B),
(b3) 0 bis 40 Gew.% von mindestens einem weiteren Polymer (FP), bezogen auf das Gesamtgewicht des mindestens einen Bindemittels (B).

11. Verfahren nach Anspruch 10, wobei das weitere Polymer (FP) mindestens ein weiteres Polymer (FP) ausgewählt aus der Gruppe bestehend aus einem Polyether, einem Polyurethan, einem Polyepoxid, einem Polyamid, einem vinylaromatischen Polymer, einem Poly(vinylester), einem Poly(vinylether), einem Poly(alkyl(meth)acrylat) und Copolymeren davon ist.

12. Verfahren nach einem der Ansprüche 1 bis 11, wobei die Grundplatte (BP)
i) eine Dicke von 0,5 bis 20 mm, vorzugsweise 1 bis 15 mm und bevorzugter 1 bis 10 mm hat, und/oder
ii) durch Spritzgießen oder durch Extrusion hergestellt ist, vorzugsweise durch Spritzgießen.

13. Verfahren nach einem der Ansprüche 1 bis 12, wobei dem Schritt e) die Schritte f1) bis h1) folgen:
f1) Entbindern der Grundplatte (BP) und des dreidimensionalen Grünkörpers (GB), der an der Grundplatte (BP) befestigt ist, wobei ein dreidimensionaler Braunkörper (BB) aus dem dreidimensionalen Grünkörper (GB) gebildet wird,
g1) Sintern der Grundplatte (BP) und des dreidimensionalen Braunkörpers (B), der an der Grundplatte (BP) befestigt ist, wobei ein dreidimensionaler gesinterter Körper aus dem dreidimensionalen Braunkörper (BB) gebildet wird,
h1) Trennen des dreidimensionalen gesinterten Körpers von der Grundplatte (BP).

14. Verfahren nach einem der Ansprüche 1 bis 12, wobei dem Schritt e) die Schritte f2) bis h2) folgen:
f2) Trennen des dreidimensionalen Grünkörpers (GB) von der Grundplatte (BP),
g2) Entbindern des dreidimensionalen Grünkörpers (GB), wobei ein dreidimensionaler Braunkörper (BB) aus dem dreidimensionalen Grünkörper (GB) gebildet wird, und
h2) Sintern des dreidimensionalen Braunkörpers (B), wobei ein dreidimensionaler gesinterter Körper aus dem dreidimensionalen Braunkörper (BB) gebildet wird.

15. Verfahren nach Anspruch 13 oder 14, wobei das Trennen mechanisch durchgeführt wird, vorzugsweise durch Brechen, Sägen, Fräsen, Schleifen und/oder Drehen.

## Revendications

1. Procédé pour la production d'un corps vert (GB) tridimensionnel par un procédé d'impression tridimensionnelle (3D) employant au moins une matière première, un compartiment de construction et une imprimante à extrusion tridimensionnelle (imprimante 3D) contenant au moins une buse, le procédé comprenant les étapes suivantes a) à e) :
a) alimentation de l'au moins une matière première dans l'imprimante 3D comprenant l'au moins une buse, l'au moins une matière première comprenant au moins un liant (B) et au moins une poudre inorganique (IP), et, l'au moins un liant (B) comprenant au moins un polyoxyméthylène (POM),
b) chauffage de l'au moins une matière première à l'intérieur de l'imprimante 3D,
c) extrusion de l'au moins une matière première chauffée obtenue dans l'étape b) à travers l'au moins une buse afin d'obtenir au moins un brin extrudé,
d) formation du corps vert (GB) tridimensionnel couche par couche à partir de l'au moins un brin extrudé obtenu dans l'étape c) sur une plaque de base (BP) située dans le compartiment de construction, la plaque de base (BP) comprenant l'au moins un liant (B) et éventuellement l'au moins une poudre inorganique (IP), et
e) élimination du corps vert (GB) tridimensionnel et de la plaque de base (BP) du compartiment de construction, le corps vert (GB) tridimensionnel étant fixé à la plaque de base (BP).

2. Procédé selon la revendication 1,
i) la taille de particule de l'au moins une poudre inorganique (IP) étant de 0,1 à 80 µm, préférablement de 0,5 à 50 µm, plus préférablement de 1 à 30 µm, et/ou
ii) l'au moins une poudre inorganique (IP) étant une poudre d'au moins une matière inorganique choisie dans le groupe constitué par un métal, un alliage métallique et un précurseur de matériaux céramiques, et/ou
iii) dans l'étape b), l'au moins une matière première étant chauffée jusqu'à une température supérieure à la température de fusion de l'au moins un liant (B), et/ou
iv) le chauffage de l'au moins une matière première selon l'étape b) étant mis en œuvre à l'intérieur de l'au moins une buse.

3. Procédé selon la revendication 1 ou 2, l'au moins une matière première étant au moins un filament.

4. Procédé selon la revendication 3,
i) l'au moins un filament comprenant de 30 à 70 % en volume de l'au moins une poudre inorganique (IP) et de 30 à 70 % en volume de l'au moins un liant (B), préférablement de 40 à 65 % en volume de l'au moins une poudre inorganique (IP) et de 35 à 60 % en volume de l'au moins un liant (B), sur la base du volume total de l'au moins un filament, et/ou
ii) le diamètre de l'au moins un filament étant de 1,5 à 3,5 mm, préférablement de 1,6 à 3,2 mm, plus préférablement de 1,7 à 3,1 mm.

5. Procédé selon la revendication 3, l'au moins un filament comprenant un matériau de noyau (CM) revêtu par une couche d'un matériau d'enveloppe (SM),
le matériau de noyau (CM) comprenant de 30 à 70 % en volume de l'au moins une poudre inorganique (IP) et de 30 à 70 % en volume de l'au moins un liant (B), sur la base du volume total du matériau de noyau (CM),
et
le matériau d'enveloppe (SM) comprenant de 75 à 100 % en volume d'au moins un polymère thermoplastique (TP), de 0 à 20 % en poids de l'au moins une poudre inorganique (IP) et de 0 à 25 % en volume d'au moins un additif (A), sur la base du poids total du matériau d'enveloppe (SM).

6. Procédé selon la revendication 5,
i) le diamètre de l'au moins un filament étant de 1,5 à 3,5 mm, préférablement de 1,6 à 3,2 mm, plus préférablement de 1,7 à 3,1 mm, et/ou
ii) le diamètre du matériau de noyau (CM) étant de 1,3 à 3,0 mm, préférablement de 1,4 à 2,95 mm, plus préférablement de 1,5 à 2,9 mm, et/ou
iii) l'épaisseur de la couche de matériau d'enveloppe (SM) étant de 0,01 à 0,5 mm, préférablement de 0,02 à 0,3 mm, plus préférablement de 0,025 à 0,25 mm, et/ou
iv) l'au moins un polymère thermoplastique (TP) du matériau d'enveloppe (SM) étant choisi dans le groupe composé d'un polyoxyméthylène (POM), de polyoléfines (PE) telles qu'un polypropylène, de polyuréthanes (PU), de polyamides (PA), de polyéthers (PETH), de polycarbonates (PC), et/ou de polyesters (PES), tels qu'un poly(acide lactique) et des mélanges correspondants, et/ou
v) l'au moins un additif (A) du matériau d'enveloppe (SM) étant choisi dans le groupe constitué par des dispersants, des stabilisants, des pigments et des agents tackifiants.

7. Procédé selon la revendication 1 ou 2, l'au moins une matière première étant au moins un granule.

8. Procédé selon la revendication 7, l'au moins un granule comprenant de 30 à 70 % en volume de l'au moins une poudre inorganique (IP) et de 30 à 70 % en volume de l'au moins un liant (B), préférablement de 40 à 65 % en volume de l'au moins une poudre inorganique (IP) et de 35 à 60 % en volume de l'au moins un liant (B), sur la base du volume total de l'au moins un granule.

9. Procédé selon l'une quelconque des revendications 1 à 8, la plaque de base (BP) comprenant de 0 à 70 % en volume de l'au moins une poudre inorganique (IP) et de 30 à 100 % en volume de l'au moins un liant (B), préférablement de 30 à 70 % en volume de l'au moins une poudre inorganique (IP) et de 30 à 70 % en volume de l'au moins un liant (B) et plus préférablement de 40 à 65 % en volume de l'au moins une poudre inorganique (IP) et de 35 à 60 % en volume de l'au moins un liant (B), sur la base du volume total de la plaque de base (BP).

10. Procédé selon l'une quelconque des revendications 1 à 9, l'au moins un liant (B) comprenant
(b1) de 50 à 98 % en poids de l'au moins un polyoxyméthylène (POM) sur la base du poids total de l'au moins un liant (B),
(b2) de 2 à 50 % en poids de l'au moins une polyoléfine (PO) sur la base du poids total de l'au moins un liant (B),
(b3) de 0 à 40 % en poids d'au moins un autre polymère (FP) sur la base du poids total de l'au moins un liant (B).

11. Procédé selon la revendication 10, l'autre polymère (FP) étant au moins un autre polymère (FP) choisi dans le groupe constitué par un polyéther, un polyuréthane, un polyépoxyde, un polyamide, un polymère aromatique vinylique, un poly(ester de vinyle), un poly(éther de vinyle), un poly((méth)acrylate alkyle) et des copolymères correspondants.

12. Procédé selon l'une quelconque des revendications 1 à 11, la plaque de base (BP)
i) ayant une épaisseur allant de 0,5 à 20 mm, préférablement allant de 1 à 15 mm et plus préférablement allant de 1 à 10 mm, et/ou
ii) étant préparée par moulage par injection ou par extrusion, préférablement par moulage par injection.

13. Procédé selon l'une quelconque des revendications 1 à 12, l'étape e) étant suivie par les étapes f1) à h1)
f1) déliantage de la plaque de base (BP) et du corps vert (GB) tridimensionnel fixé à la plaque de base (BP), un corps brun (BB) tridimensionnel étant formé à partir du corps vert (GB) tridimensionnel,
g1) frittage de la plaque de base (BP) et du corps brun (BB) tridimensionnel fixé à la plaque de base (BP), un corps fritté tridimensionnel étant formé à partir du corps brun (BB) tridimensionnel, et
h1) séparation du corps fritté tridimensionnel de la plaque de base (BP).

14. Procédé selon l'une quelconque des revendications 1 à 12, l'étape e) étant suivie par les étapes f2) à h2)
f2) séparation du corps vert (GB) tridimensionnel de la plaque de base (BP),
g2) déliantage du corps vert (GB) tridimensionnel, un corps brun (BB) tridimensionnel étant formé à partir du corps vert (GB) tridimensionnel, et
h2) frittage du corps brun (BB) tridimensionnel, un corps fritté tridimensionnel étant formé à partir du corps brun (BB) tridimensionnel.

15. Procédé selon la revendication 13 ou 14, la séparation étant mise en œuvre de manière mécanique, préférablement par rupture, sciage, mouture, broyage et/ou calibrage.
